(19) Europäisches Patentamt
European Patent Office
Office européen des brevets

(11) Publication number : 0 408 772 B1

# (12) EUROPEAN PATENT SPECIFICATION

(45) Date of publication of patent specification : 08.06.94 Bulletin 94/23

(51) Int. Cl.$^5$ : B01D 53/34, B03C 3/16, B03C 3/38

(21) Application number : 90902843.3

(22) Date of filing : 07.02.90

(86) International application number : PCT/JP90/00150

(87) International publication number : WO 90/09227 23.08.90 Gazette 90/20

## (54) EXHAUST GAS CLEANING METHOD.

(30) Priority : 07.02.89 JP 26745/89

(43) Date of publication of application : 23.01.91 Bulletin 91/04

(45) Publication of the grant of the patent : 08.06.94 Bulletin 94/23

(84) Designated Contracting States : AT CH DE FR GB IT LI

(56) References cited :
EP-A- 0 268 094
EP-A- 0 269 060
EP-A- 0 294 658
EP-A- 0 326 686
FR-A- 2 113 283
JP-A-51 151 258
JP-A-52 140 499
JP-A-63 291 626

(73) Proprietor : EBARA CORPORATION
11-1, Haneda Asahi-cho
Ota-ku Tokyo, 144 (JP)

(72) Inventor : AOKI, Shinji Ebara Corporation
11-1, Hanedaasahicho
Ota-ku
Tokyo 144 (JP)
Inventor : SUZUKI, Ryoji Ebara Corporation
11-1, Hanedaasahicho
Ota-ku Tokyo 144 (JP)
Inventor : MAEZAWA, Akihiko Ebara Corporation
11-1, Hanedaasahicho
Ota-ku Tokyo 144 (JP)
Inventor : AGARIDA, Toru Ebara Corporation
11-1, Hanedaasahicho
Ota-ku Tokyo 144 (JP)
Inventor : OKAMOTO, Kyoichi Ebara Corporation
11-1, Hanedaasahicho
Ota-ku Tokyo 144 (JP)

(74) Representative : Nöth, Heinz, Dipl.-Phys. et al
Patentanwälte
Pfenning, Meinig & Partner
Mozartstrasse 17
D-80336 München (DE)

EP 0 408 772 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of purifying waste gases, more particularly, to a method of purifying waste gases that are contaminated by automotive exhaust gases and other emissions and which contain nitrogen oxides (nitrogen monoxide and nitrogen dioxide), a carbon-containing powder and low concentration of sulfur oxides.

Conventionally known methods for removing nitrogen oxides from gases include the use of catalysts, exposure to ultraviolet radiation, absorption processes, adsorption processes, and exposure to electron beams. However, no effective method has yet been discovered that enables nitrogen monoxide and nitrogen dioxide as well as a carbon-containing powder to be removed in an efficient, economical and safe way from waste gases that are contaminated by automotive exhaust gases and other emissions and which contain nitrogen monoxide and nitrogen dioxide in low concentrations, as well as said carbon-containing powder.

For instance, the method of reducing nitrogen oxides to nitrogen gas using catalysts is not suitable for the purpose of removing nitrogen oxides from gases at ordinary temperatures since the effects of the catalysts used are not exhibited unless the reaction temperature is at least 300°C.

Exposure to ultraviolet radiation causes nitrogen oxides to decompose into $N_2$ and $O_2$ in the presence of added ammonia, with the attendant capability of converting nitrogen oxides to ammonium nitrate. However, this method has a slow reaction rate and hence is not suitable for application to flowing gases. Exposure to ultraviolet radiation may be combined with an adsorption process in such a way that the ozone produced by exposure to ultraviolet radiation is reacted with nitrogen monoxide to form nitrogen dioxide, which is adsorbed on an adsorbent. However, the adsorbents available today have such a low capacity for removing nitrogen dioxide that they have to be replaced fairly often and this makes said combined process uneconomical. The above-described method of generating ozone by exposure to ultraviolet radiation is not energy efficient and is by no means economical. Similarly, the use of a conventional ozone generator is also not an effective method since it entails not only the problem of low energy efficiency but also a problem of cost efficiency concerning the treatment of nitrogen dioxide.

The absorption process is a kind of wet process that employs various chemical absorbents to absorb target materials by chemical reactions. However, no effective chemicals have been found to date that react with nitrogen monoxide at ordinary temperatures and the absorbents available today are inadequate for gases having a high NO content which are contaminated by automotive exhaust gases and other emissions.

The adsorption process uses adsorbents to remove nitrogen oxides (chiefly nitrogen dioxide) in either a physical or chemical way. This is the most common method used today to purify air that contains nitrogen dioxide at low concentrations. However, this method cannot be considered to be effective in treating gases of the kind to be treated by the present invention which contain certain levels of nitrogen oxides (chiefly nitrogen monoxide). Stated more specifically, the concentration of nitrogen dioxide in the air atmosphere is usually no more than several tens of ppb (parts per billion), which is less than the concentration of nitrogen dioxide in the gases under consideration by several tens of times. The adsorption method is effective for treating gases with very low concentrations of nitrogen dioxide but the adsorbents available today have a short effective life and are unable to withstand prolonged use in the treatment of gases that contain at least 50% more nitrogen monoxide than conventionally treated gases and which contain nitrogen monoxide at concentrations in the order of several ppm. The results of tests conducted by the assignee showed that even alkali-loaded carbon which has the highest capacity for removing nitrogen dioxide of all the absorbents known today including zeolite and activated carbon, showed a 50% or more deterioration in its adsorbent capability in less than several tens of hours at a linear velocity (LV) of 0.5 m/sec. For practical applications, the capacity of adsorbents must be maintained for at least one month and the cost for maintaining their capacity is also an important factor to be considered in selecting an effective method of removing nitrogen oxides.

Exposure to electron beams is a technique developed by the assignee; in this process, highly reactive radicals such as O, OH and $HO_2$ are generated by exposure to electron beams so that SOx and NOx are converted to sulfuric acid and nitric acid, respectively, which react with added ammonia and are recovered as ammonium sulfate and ammonium nitrate.

According to the known method in JP-A-52 140 499, exhaust gas containing $SO_2$ and NOx is introduced into a reactor where it is exposed to electron beam radiation with a dose rate of 0.5 - 1.0 Mrad/sec. The exhaust gas is then supplied into an electrical dust precipitator. To achieve a mixture or double salt of ammonium sulfate/nitrate a limited amount of ammonia is added to the exhaust gas before or after radiation treatment. EP-A-0 294 658 discloses a process for treating an effluent gas containing sulfur oxides and/or nitrogen oxides wherein the effluent gas is irradiated by ionizing irradiation, ammonia is added to the effluent gas before, during or after the irradiation and the resulting ammonium sulfate and/or ammonium nitrate are collected by means of a dry dust collector.

These methods are already used commercially in the treatment of combustion gases generated in factories and electric power plants in industrial scale.

Exposure to electron beams can also be used as a method for treating gases that are contaminated by automotive exhaust gases and other emissions and which contain nitrogen monoxide and nitrogen dioxide. Such a method is disclosed in JP-A-63 291 626. However, this method comprises exposing a waste gas to electron beams in the absence of ammonia and subsequently treating it with either an activated carbon based adsorbent or a zeolite based adsorbent. Thus, the adsorbents used have a rather low capacity for removing nitrate ions or nitrogen dioxide and must be replaced fairly often which constitutes a significant economic problem.

As described above, various methods for removing nitrogen oxides have so far been known in the art but no practical and effective method has been developed for purifying gases that are contaminated by automotive exhaust gases and other emissions.

An object, therefore, of the present invention is to provide a method of purification by which deleterious materials can be removed in an efficient, economical and safe manner from waste gases that are contaminated by automotive exhaust gases and other emissions and which contain nitrogen oxides (NOx), a carbon-containing powder and low concentration of sulfur oxides.

The above-stated object of the present invention can be attained by a method of purifying an automotive exhaust contaminated waste gas containing nitrogen oxides (NOx) in a concentration range of ca. 0,1 to 5 ppm, a carbon-containing powder and low concentration of sulfur oxides (SOx),

comprising adding ammonia to said waste gas in an amount substantially not more than one equivalent compared to the sum of NOx and SOx in said waste gas, exposing said waste gas to an ionizing radiation for a total dose of ca. 0.001 - 0.5 Mrad, removing the resulting dust and/or mist and carbon-containing dust with a wet electrostatic precipitator at an applied voltage of ca. 10 - 100 kV and after the treatment with the wet electrostatic precipitator, passing the resulting waste gas for decomposing ozone therein through a layer of activated carbon based filler at a linear velocity of ca. 0.01 - 1.0 m/sec.

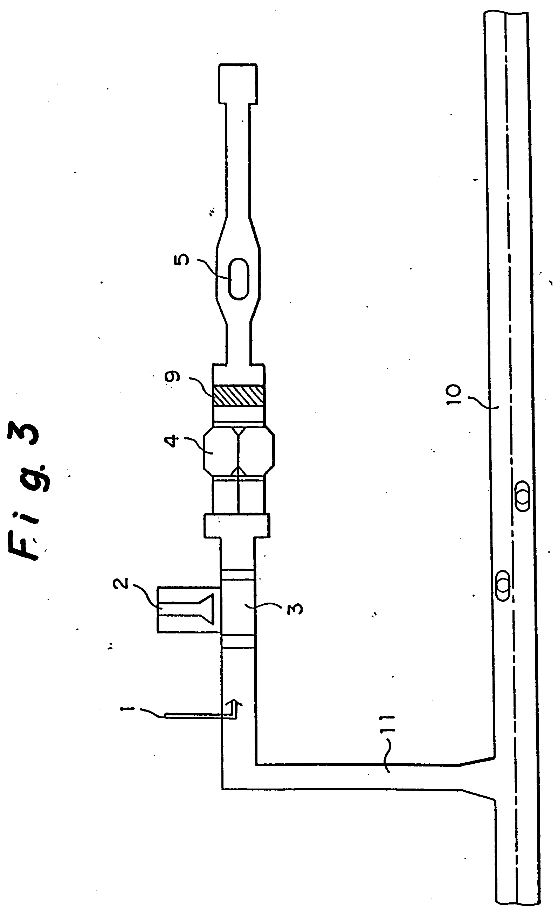

Figs. 1 is a flow diagram showing the sequence of steps involved in implementing the method of the present invention in accordance with preferred examples; Fig. 2 is a graph showing the relationship between absorption dose and each of the percent denitration and ozone concentration; and Fig. 3 illustrates the concept of the method of the present invention as it is applied to a tunnel for automobiles.

To begin with, the operating principle of the present invention is described below. When a gas such as air is exposed to an ionizing radiation, the components of the gas, i.e., nitrogen, oxygen and water, generate highly reactive radicals such as N, O, OH and $HO_2$ (reaction scheme 1):

$$N_2,\ O_2,\ H_2O \xrightarrow{e^-} N,\ O,\ OH,\ HO_2 \qquad \text{(scheme 1)}$$

These radicals react with the nitrogen oxides to be removed and nitrogen gas and nitric acid will be generated according to the following reaction schemes 2 - 4:

$$NO + N \rightarrow N_2 + 1/2\ O_2 \quad \text{(scheme 2)}$$

$$NO + HO_2 \rightarrow HNO_3 \quad \text{(scheme 3)}$$

$$NO_2 + OH \rightarrow HNO_3 \quad \text{(scheme 4)}$$

The nitrogen gas generated in accordance with reaction scheme 2 is released as a harmless gas, whereas the nitric acid generated in accordance with reaction scheme 3 or 4 turns to ammonium nitrate in the presence of ammonia according to the following reaction scheme 5:

$$HNO_3 + NH_3 \rightarrow NH_4NO_3 \quad \text{(scheme 5)}$$

The reactions according to schemes 1 - 5 are completed momentarily within one second. The low concentration of sulfur oxides in the gas will undergo similar reactions to generate a small amount of ammonium sulfate.

The ammonium nitrate and ammonium sulfate obtained by the reactions described above are recovered with a wet electrostatic precipitator.

Referring to the case where a flue gas is treated by exposure to an ionizing radiation ammonium sulfate is usually present and recovered together with ammonium nitrate. Unburnt carbon also is usually present in a smaller amount than ammonium nitrate. Thus, when a flue gas is treated by exposure to an ionizing radiation, the resulting by-products may be recovered in a dry state without causing any problem.

However, when a waste gas originating from an automotive exhaust gas is to be treated by exposure to an ionizing radiation, sulfur oxides are present in small amounts and most of the by-products that can be recovered is comprised of ammonium nitrate. The proportion of unburnt carbon present is also fairly large compared to the by-product resulting from the treatment of a flue gas. Thus, the presence of ammonium nitrate and unburnt carbon in admixture causes a potential risk of excessive heat generation or explosion. Accordingly, when automotive exhaust gases and other emissions are to be treated by exposure to an ionizing radiation, the resulting by-products need to be recovered by safe wet methods.

An exemplary wet method of recovery is the use of a scrubber but if the amount of air to be treated is very large as in the case to which the present invention is applied, increased pressure loss will occur. This problem, combined with the possibility of mist leakage, makes the scrubber process unsuitable for the purposes of the present invention.

Accordingly, the method of recovering by-products with a wet electrostatic precipitator is recommended in that the ammonium nitrate based by-product which results from the treatment of automotive exhaust gases and other emissions by exposure to an ionizing radiation can be recovered in a safe way without causing the problems of pressure loss and mist leakage.

In addition, a wet electrostatic precipitator has the advantage of reducing the amount of leaking ammonia since any ammonia that remains unreacted can be absorbed not only by the spray water used but also by the action of the wetted wall.

A further advantage is improved cost efficiency since if the water used in the wet electrostatic precipitator is circulated and used repeatedly, the concentration of ammonium nitrate being recovered can be sufficiently increased so that it can be utilized as a fertilizer.

Furthermore, in accordance with the present invention, an activated carbon based filler is used at the final stage of the apparatus combining exposure to an ionizing radiation with a wet electrostatic precipitator and this insures that the ozone generated by exposure to an ionizing radiation or by electrification with the precipitator is decomposed. But in this case, the activated carbon based filler is not intended to remove NOx. The activated carbon based filler is capable of decomposing more ozone than its own weight and, hence, the use of the activated carbon based filler for the purpose of ozone decomposition is reasonably economical. For increasing the efficiency of removal of nitrogen oxides, it is effective to increase the exposure dose of ionizing radiation. But, on the other hand, it was found that the amount of ozone had a tendency to increase with the exposure dose of ionizing radiation. Ozone released into the air atmosphere is harmful not only to animals and plants but also to humans and has hence been a barrier to previous attempts to enhance removal of nitrogen oxides. However, using the activated carbon based filler which is capable of economical ozone decomposition, is effectively improves the capacity for removing nitrogen oxides since the exposure dose of an ionizing radiation to be applied can safely be increased.

It has also been found that if a positive electrode is used as the discharging electrode in the wet electrostatic precipitator, less ozone is generated by electrification than in the prior case where a negative discharging electrode is commonly used.

The activated carbon based filler is a fibrous, particulate or agglomerate material that contains activated carbon. These materials will insure that the gas treated by exposure to an ionizing radiation and with the wet electrostatic precipitator come in contact with reduced pressure loss at a linear velocity (LV) of ca. 0.01 - 1.0 m/sec. Particulate activated carbon is desirably mixed with zeolite or silica gel since not only the potential risk of burning which may occur when concentrated ozone is decomposed with activated carbon alone is eliminated but also its ability to decompose ozone is improved. It is also possible to use "loaded carbon" which has a chemical such as an alkali metal carbonate added to activated carbon.

The activated carbon based filler that is used in the present invention may be selected from among any type of activated carbon that is commonly used as an adsorbent.

The activated carbon based filler has marginal effectiveness in removing nitrogen monoxide and its ability to remove nitrogen dioxide is also very low (in the order of a few ppm) and will deteriorate very rapidly in no more than several tens of hours. Thus, when it is used for the purpose of removing nitrogen dioxide, it must be replaced fairly often and this makes its use uneconomical as already pointed out in connection with the description of the prior art. However, it has been confirmed that besides the ability to decompose ozone, the activated carbon based filler is also capable of reducing deleterious nitrogen dioxide to less toxic nitrogen monoxide.

If the activated carbon based filler is used in the form of a mobile layer, any dust particles collected on the surfaces of the activated carbon based filler particles can be dislodged to ensure the whole surface is utilized. This also facilitates replacement of an exhausted activated carbon based filler with a fresh filler.

Examples of the ionizing radiation that may be applied to the gases of the type to which the present invention is applied and which contain nitrogen oxides include electron beams, $\alpha$-rays, $\beta$-rays, $\gamma$-rays, X-rays and neutron beams; electron beams may be conveniently used. The dose of such ionizing radiation within the range of 0.001 Mrad - 0.5 Mrad will generally suffice for the purposes of the present invention. These ionizing radiations may be applied at ordinary temperatures. The voltage to be applied to the wet electrostatic precipitator is preferably within the range of ca. 10 - 100 kV.

In accordance with the present invention, nitrogen oxide compounds having lower oxidation state in the gas being treated, in particular nitrogen monoxide, reacts with radicals such as N, O, OH and $HO_2$ resulting from the nitrogen, oxygen and water in the gas upon exposure to an ionizing radiation, whereby it is converted to harmless nitrogen gas or oxidized to a compound having a higher oxidation state (nitric acid), which will react with ammonia to form ammonium nitrate. The resulting ammonium nitrate is recovered in a safe form into the circulating water in the wet electrostatic precipitator. Further, any deleterious ozone generated is decomposed with the activated carbon based filler loaded in the last stage of the process. The activated carbon based filler offers an additional advantage in that the nitrogen dioxide that remains after the treatments described above is reduced to nitrogen monoxide which has comparatively low toxicity.

The gases to be treated by the method of the present invention are those which contain nitrogen oxides in amounts in the order of a few ppm, and the method will prove particularly effective when it is applied to purification of waste gases that originate from automotive exhaust gases, such as those which occur in tunnels for automobiles or in parking lots in the basement of buildings. The exhaust gases occurring in such tunnels are known to contain ca. 0.1 - 5.0 ppm of NOx, ca. 0.05 - 1.0 mg/$m^3$ of soot and dust particles, solid carbon (ca. 10 - 80% of the soot/dust content) and trace amounts of $SO_2$. Fig. 4 shows the concept of the method of the present invention as it is applied to a tunnel for automobiles. Shown by 10 in Fig. 4 is the tunnel and 11 is an exhaust duct, the air from which is treated by the method of the present invention.

The following example is provided for the purpose of further illustrating the present invention but is in no way to be taken as limiting.

## Example

Fig. 1 is a flow diagram showing the sequence of steps involved in implementing the method of the present invention in accordance with a preferred example. In Fig. 1, numeral 1 denotes the area where ammonia is added; 2 is an apparatus-for applying an ionizing radiation; 3 is a reactor; 4 is a wet electrostatic precipitator; and 5 is a blower. After being mixed with ammonia in area 1, the gas to be treated enters the reactor 3, where it is exposed to an ionizing radiation and thence supplied to the wet electrostatic precipitator 4. In the electrostatic precipitator 4, water that has been freed of dust in a circulating water cleaner 6 is being sprayed to capture the ammonium nitrate and carbon coming from the reactor 3, and the purified gas is discharged from the blower 5. The concentrated ammonium nitrate is recovered as a fertilizer through a section 7. A specific example of the treatment using the process shown in Fig. 1 is described below.

Air containing 1.8 - 2.7 ppm of NOx (80 - 90% NO, with the remainder being $NO_2$), ca. 0.1 - 0.7 mg/$m^3$ of soot and dust particles (50% solid carbon in the soot and dust) and trace amounts of $SO_2$ was fed into the reactor 3 at ambient temperature and at a rate of 1.000 N$m^3$/h, in which reactor the air was exposed to electron beams from the electron beam generator 2 for a total dose of 0.004 Mrad - 0.12 Mrad. Before exposure to electron beams, the gas was mixed with ammonia that was added in area 1 in an amount that corresponded to 0.65 - 1.1 equivalents compared to the concentration of NOx.

After the exposure to electron beams, the concentration of NOx in the gas was measured with a chemiluminescent NOx meter and the results are shown in Fig. 2 as percent denitration, or the percentage of removed NOx with reference to the concentration of NOx at the inlet to the reactor. The graph of Fig. 2 shows the relationship between absorption dose and each of the percent denitration ($\eta$NOx) and ozone concentration. Most of the NOx in the outlet gas was detected in the form of nitrogen dioxide. The percent denitration improved with the increase in absorption dose and, at a dose in the region of 0.05 Mrad, the percent denitration was at least 80%. Even when the dose was in the region of 0.005 Mrad, about 50% denitration was achieved. Given the same exposure dose, the percent denitration ($\eta$NOx) differed with the concentration of NOx and the general tendency was such that the lower the NOx concentration, the higher the $\eta$NOx. To take the case of 0.004 Mrad as an example, $\eta$NOx was 31%, 37% and 47% when the NOx concentration was 2.70 ppm (c), 2.30 ppm (b) and 2.05 ppm (a), respectively. A similar tendency was observed for other exposure doses. Hence, the dose of exposure for the waste gas to be treated will vary with the concentration of NOx at the inlet and the percent denitration required of the waste gas. However, considering the range of concentrations of NOx in the gas to be treated by the present invention (ca. 0.1 - 5.0 ppm), one may well say that the exposure of 0.001 Mrad - 0.5 Mrad will suffice for the purposes of the present invention. In the test conducted in the Example, the ozone concentration was also measured; it increased as the absorption dose increased and upon exposure for a dose in the region of 0.05 Mrad, the measured concentration of ozone was 2.0 ppm. However, at an exposure dose in the region of 0.005 Mrad, the ozone concentration was less than 0.1 ppm.

The process shown in Fig. 1 provides an activated carbon based filler layer 9 subsequent to the wet electrostatic precipitator 4.

A test was conducted with electron beams being mainly applied for an absorption dose that ranged from about 0.05 Mrad to about 0.1 Mrad. The filler layer 9 was packed with crushed particles of activated carbon and part of the gas exposed to electron beams was introduced into the filler layer 30 mm thick at a linear velocity of 0.8 m/sec. Thereafter, the concentrations of NOx and ozone were measured as described above. In the test run that continued for more than several tens of hours, the crushed particles of activated carbon lost their denitrating ability and the concentration of NOx in the outlet gas was substantially equal to the value attained above but at least 60% of the NOx detected was nitrogen monoxide. No ozone was detected at all in the gas that had passed through the layer of crushed particles of activated carbon.

As will be apparent from the foregoing description, the method of the present invention offers the following advantages.

(1) It is difficult to remove nitrogen oxides having a high nitrogen monoxide content by other methods but in accordance with the present invention, contaminated gases such as air that contains nitrogen oxides at concentrations in the ppm order can be freed of such nitrogen oxides in an efficient, economical and safe way.

(2) By the action of exposure to an ionizing radiation, a nitrogen oxide compound of lower oxidation state is converted to harmless nitrogen gas or oxidized to a higher oxidation state (nitric acid) and, thereafter, they are combined with preliminarily added ammonia to form ammonium nitrate, which is then passed through a wet electrostatic precipitator and thence recovered in a safe form (i.e., an aqueous solution of ammonium nitrate) and utilized as a fertilizer.

(3) By using an activated carbon based filler, the ozone generated by exposure to an ionizing radiation or electrification with a wet electrostatic precipitator is decomposed and the nitrogen dioxide that remains after completion of these treatments can be reduced to less toxic nitrogen monoxide.

(4) Nitrogen oxides, particularly nitrogen monoxide, can be removed from the contaminated air at ambient temperature and atmospheric pressure in an efficient, safe and yet economical way.

## Claims

1. A method of purifying an automotive exhaust contaminated waste gas containing nitrogen oxides (NOx) in a concentration range of ca. 0,1 to 5 ppm, a carbon-containing powder and low concentration of sulfur oxides (SOx),

   comprising adding ammonia to said waste gas in an amount substantially not more than one equivalent compared to the sum of NOx and SOx in said waste gas, exposing said waste gas to an ionizing radiation for a total dose of ca. 0.001 - 0.5 Mrad, removing the resulting dust and/or mist and carbon-containing dust with a wet electrostatic precipitator at an applied voltage of ca. 10 - 100 kV and after the treatment with the wet electrostatic precipitator, passing the resulting waste gas for decomposing ozone therein through a layer of activated carbon based filler at a linear velocity of ca. 0.01 - 1.0 m/sec.

2. A method according to claim 1 wherein the discharging electrode in said wet electrostatic precipitator is a positive electrode.

3. A method according to Claim 1 or 2 wherein said activated carbon based filler is in the form of fibers, particles or agglomerates that contain activated carbon.

4. A method according to any one of Claims 1 to 3 wherein the layer of activated carbon based filler is either a fixed bed or moving bed.

5. A method according to any one of Claims 1 to 4 wherein at least one ionizing radiation selected from among electron beams, $\alpha$-rays, $\beta$-rays, $\gamma$-rays, X-rays and neutron beams is used.

6. A method according to any one of Claims 1 to 5 wherein the water used in the wet electrostatic precipitator is recycled and recovered as a fertilizer.

## Patentansprüche

1. Verfahren zum Reinigen eines mit Kraftfahrzeug-Auspuffgas verunreinigten Abgases, welches Stickstoffoxide ($NO_x$) in einem Konzentrationsbereich von ca. 0,1 bis 5 ppm, ein Kohlenstoff enthaltendes Pulver und in geringer Konzentration Schwefeloxide ($SO_x$) enthält, bestehend aus dem Zugeben von Ammoniak zu dem Abgas in einer im wesentlichen nicht mehr als ein Äquivalent betragenden Menge, bezogen auf die Summe von $NO_x$ und $SO_x$ in dem Abgas, dem Bestrahlen des Abgases mit einer ionisierenden Strahlung in einer Gesamtdosis von ca. 0,001 - 0,5 Mrad (10 - 5000 Gy), dem Entfernen des entstehenden Staubes und/oder Nebels und Kohlenstoff enthaltenden Staubes mit einem elektrostatischen Naßabscheider bei einer angelegten Spannung von ca. 10 - 100 kV und, nachfolgend auf die Behandlung mit dem elektrostatischen Naßabscheider, dem Hindurchführen des entstehenden Abgases, zum Zersetzen von darin enthaltenem Ozon, durch eine Schicht aus einem Füllmaterial auf Basis von aktiviertem Kohlenstoff mit einer linearen Geschwindigkeit von ca. 0,01 - 1,0 m/s.

2. Verfahren nach Anspruch 1, bei dem die Entladungselektrode in dem elektrostatischen Naßabscheider eine positive Elektrode ist.

3. Verfahren nach Anspruch 1 oder 2, bei dem das Füllmaterial auf Basis von aktiviertem Kohlenstoff in der Form von Fasern, Teilchen oder Agglomeraten vorliegt, die aktiven Kohlenstoff enthalten.

4. Verfahren nach einem der Ansprüche 1 bis 3, bei dem die Schicht aus dem Füllmaterial auf Basis von aktiviertem Kohlenstoff entweder ein Festbett oder ein Wanderbett ist.

5. Verfahren nach einem der Ansprüche 1 bis 4, bei dem mindestens eine ionisierende Strahlung, die ausgewählt ist aus Elektronenstrahlen, $\alpha$-Strahlen, $\beta$-Strahlen, $\gamma$-Strahlen, Röntgenstrahlen und Neutronenstrahlen, eingesetzt wird.

6. Verfahren nach einem der Ansprüche 1 bis 5, bei dem das in dem elektrostatischen Naßabscheider verwendete Wasser rückgeführt und als Düngemittel wiedergewonnen wird.

## Revendications

1. Procédé de purification d'un gaz résiduaire contaminé par des gaz d'échappement d'automobile, contenant des oxydes d'azote (NOx) selon une concentration d'environ 0,1 à 5 ppm, une poudre carbonée et une faible concentration d'oxydes de soufre (SOx), selon lequel on ajoute de l'ammoniac dans ce gaz résiduaire selon une quantité pratiquement non supérieure à un équivalent par rapport à la somme des NOx et SOx dans ce gaz résiduaire, on expose ce gaz résiduaire à un rayonnement ionisant selon une dose totale d'environ 0,001 à 0,5 Mrad, on élimine la poussière et/ou le brouillard résultant et la poussière carbonée à l'aide d'un séparateur électrostatique humide en appliquant une tension d'environ 10 à 100 kV, et après le traitement avec le séparateur électrostatique humide, on fait passer le gaz résiduaire résultant afin de décomposer l'ozone contenu dans celui-ci, à travers une couche d'une charge à base de carbone activé selon une vitesse linéaire d'environ 0,01 à 1,0 m/s.

2. Procédé selon la revendication 1, dans lequel l'électrode de décharge dans le séparateur électrostatique humide est une électrode positive.

3. Procédé selon la revendication 1 ou 2, dans lequel la charge à base de carbone activé est sous la forme de fibres, de particules ou d'agglomérats contenant du carbone activé.

4. Procédé selon l'une quelconque des revendications 1 à 3, dans lequel la couche de charge à base de carbone activé, consiste en un lit fixe ou en un lit mobile.

5. Procédé selon l'une quelconque des revendications 1 à 4, dans lequel on emploie au moins un rayonnement ionisant choisi parmi des faisceaux électroniques, des rayons $\alpha$, des rayons $\beta$, des rayons $\gamma$, des rayons X et des faisceaux de neutrons.

6. Procédé selon l'une quelconque des revendications 1 à 5, dans lequel l'eau employée dans le séparateur électrostatique humide est recyclée et récupérée en tant qu'engrais.

Fig. 1

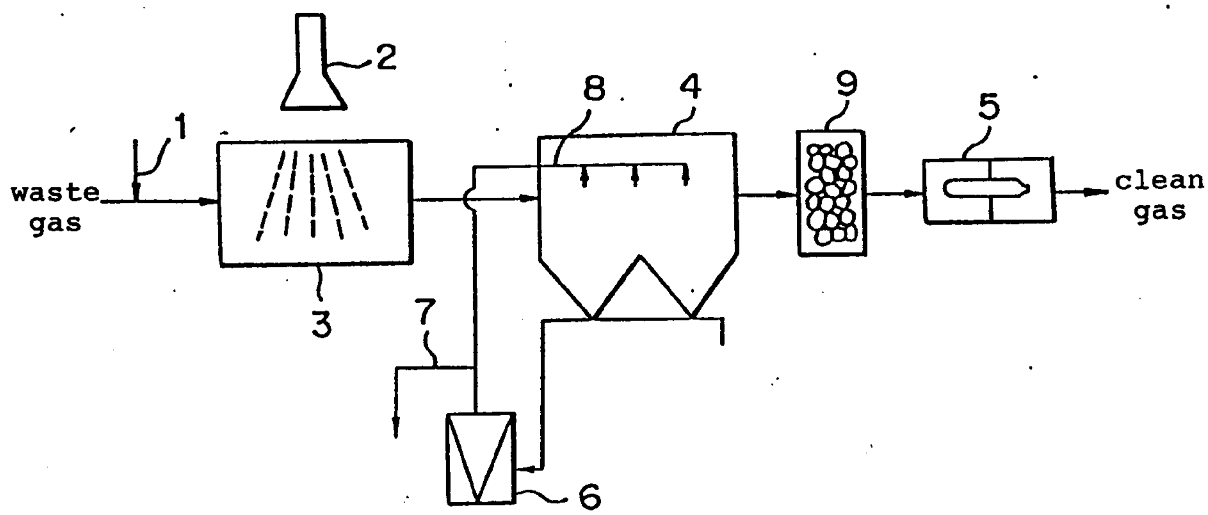

*Fig.2*

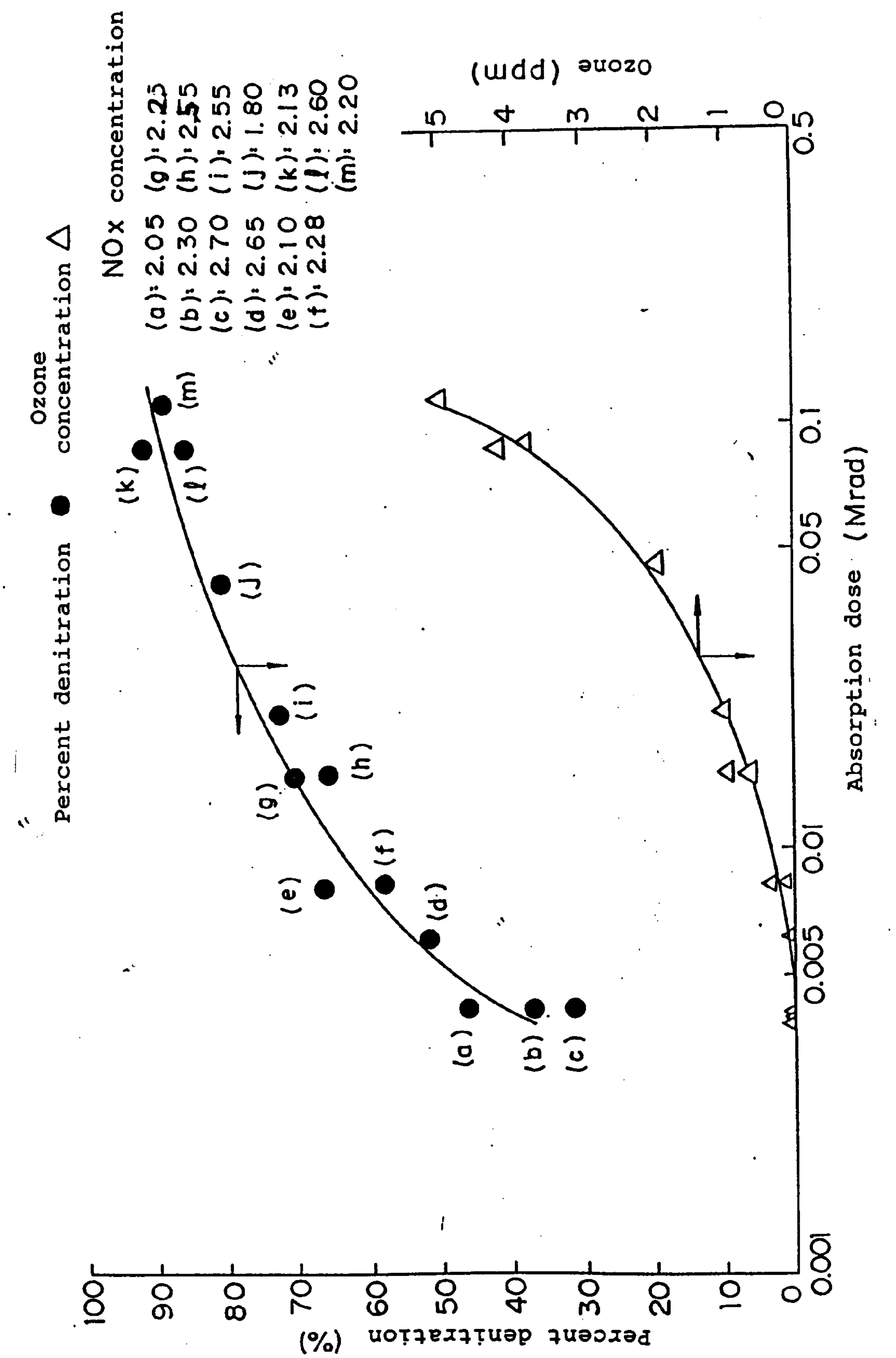
Percent denitration ●
Ozone concentration △
NOx concentration
(a): 2.05 (g): 2.25
(b): 2.30 (h): 2.55
(c): 2.70 (i): 2.55
(d): 2.65 (j): 1.80
(e): 2.10 (k): 2.13
(f): 2.28 (l): 2.60
(m): 2.20
Percent denitration (%)
0
10
20
30
40
50
60
70
80
90
100
Ozone (ppm)
0
1
2
3
4
5
0.001
0.005
0.01
0.05
0.1
0.5
Absorption dose (Mrad)
(a)
(b)
(c)
(d)
(e)
(f)
(g)
(h)
(i)
(j)
(k)
(l)
(m)

Fig. 3